# EUROPEAN PATENT APPLICATION

(11) **EP 2 808 925 A1**
(43) Date of publication of application: **03.12.2014**
(21) Application number: 12866530.4
(22) Date of filing: 23.01.2012
(51) Int. Cl.: H01M 2/18, H01M 2/02, H01M 2/34

(54) **SECONDARY BATTERY**

(71) Applicant: Hitachi Automotive Systems, Ltd., Hitachinaka-shi Ibaraki 312-8503 (JP)
(72) Inventor: URANO Kazuaki, Hitachinaka-shi Ibaraki 312-8505 (JP)
(74) Representative: MERH-IP Matias Erny Reichl Hoffmann
(86) International application number: PCT/JP2012/051298
(87) International publication number: WO 2013/111256

(57) **Abstract**

The purpose of the present invention is to obtain a secondary battery in which the insulation property between an electrode group and a battery container against an external force can be improved without lowering the battery capacity. The secondary battery (1) of the present invention has : a wound electrode group (40) formed by winding electrodes (41, 42) in which mixture layers (41b, 42b) are formed on metal foils (41a, 42a); a battery container (4) for housing the wound electrode group (40) ; and an insulator (5) interposed between the wound electrode group (40) and the battery container (4) . The insulator (5) has a section interposed between the battery container (4) and a mixture layer laminated region (40d) formed at the center of the wound electrode group (40) in the winding axis direction, and a section interposed between the battery container (4) and a pair of metal foil exposed portions (41c, 42c) formed on both sides of the wound electrode group (40) in the winding axis direction, wherein the latter region is thicker than the former region.

## Description

### Technical Field

The invention relates to a secondary battery for onboard-vehicle application, and so forth.

### Background Art

Progress has lately been made in development of a lithium-ion secondary battery high in energy density, serving as every power sources of an electric vehicle, etc. With an onboard secondary battery, there can be the Case where an external force, such as various impacts, loads, etc., will act on an electrode-group housed in a battery can, and it is therefore necessary to prevent occurrence of short circuit inside the secondary battery.

In order to cope with this, there has been disclosed a technique whereby a folding type insulating sheet is disposed .between an electrode-group and a battery can (Patent Document 1) . Further, there has also been disclosed a technique whereby an insulator is disposed in such a way as to cover a collecting sheet (Patent Document 2) . Still further, there has also been disclosed a technique whereby the outermost periphery of an electrode-group is covered with an insulating tape, and a positive-electrode lead, and a portion of a positive-electrode collection-tab, opposed to the inner face of an exterior container, are covered with a first insulating cover, whereas a negative-electrode lead and a portion of a negative-electrode collection-tab, opposed to the inner face of the exterior container, are covered with a second insulating cover (Patent Document 3).

### Citation List

### Patent Literature

Patent Document 1: Japanese Unexamined Patent Application Publication No. 2010-287456
Patent Document 2: Japanese Unexamined Patent Application Publication No. 2007-226989
Patent Document 3: Japanese Unexamined Patent Application Publication No. 2011-49066

### Summary of Invention

### Technical Problem

In the case of the technique described in Patent Document 1, if the action of an external force is taken into consideration, the thickness of the insulating sheet is preferably larger, however, if the thickness of the insulating sheet is increased, the electrode-group need be decreased in dimensions to an extent corresponding to an increase in the thickness because the battery can is in predetermined dimensions, thereby posing the risk of deterioration in battery capacity. In the case of the technique described in Patent Document 2, a region of the electrode-group, with an active material applied thereto, is insulated from a battery can by virtue of a separator; however, since the separator has micropores, there is the risk that insulation against an external force is insufficient. In the case of the technique described in Patent Document 3, a relationship in thickness between the insulating tape and the first insulating cover as well as the second insulating cover is not defined.

The present invention has been developed in view of those points described as above, and it is therefore an object of the invention to provide a secondary battery capable of improving insulation-properties between an electrode-group and a battery can, against an external force, without causing deterioration in battery capacity.

### Solution to Problem

According to one aspect of the present invention, there is provided a secondary battery including a wound-electrode group made up by winding (respective) electrodes having a metal foil with a mixture layer formed thereon, a battery can for use in housing the wound-electrode group therein, and an insulator interposed between the wound-electrode group and the battery can. Regions of the insulator, interposed between the battery can and a pair of metal-foil exposure-portions, respectively, formed on respective sides of the wound-electrode group, in a winding-axial direction thereof, are larger in thickness than a region of the insulator, interposed between the battery can and a mixture-layer stacked-layer region formed at the center of the wound-electrode group, in the.winding-axial direction thereof.

### Advantageous Effects of Invention

With the present invention, insulation-properties between the electrode-group and the battery can, against an external force, can be enhanced without causing deterioration in battery capacity. The above and other problems, configurations and effects of the present invention will be apparent from the following detailed description of the preferred embodiments of the invention in conjunction with the accompanying drawings.

### Brief Description of Drawings

Fig. 1 is a perspective view showing the external appearance of a secondary battery according a first embodiment of the invention;
Fig. 2 is an assembly view of the secondary battery;
Fig. 3 is an assembly view showing a battery-lid assemblage, and a wound-electrode group, respectively;
Fig. 4 is a perspective view showing the external appearance of the secondary battery, with a winding-completion side of the electrode group, in as-exploded state;
Fig. 5 is a perspective view for use in describing configurations of respective insulating sheets according to a second embodiment of the invention;
Fig. 6 is an assembly view of the insulating sheets in Fig. 5;
Fig, 7 is an assembly view of the insulating sheets in Fig. 5;
Fig. 8 is an assembly view for use in describing configurations of (respective insulating sheets) according to a third embodiment of the invention;
Fig. 9 is a perspective view for use in describing configurations of a fourth embodiment of the invention; and
Fig. 10 is a perspective view for use in describing configurations of insulating sheets according to a fifth embodiment of the invention. Description of Embodiments

### <First Embodiment>

### [Overall Structure]

The case of applying a secondary battery according to the present invention to a lithium-ion secondary battery in square-cornered cube is described below with reference to the accompanied drawings.

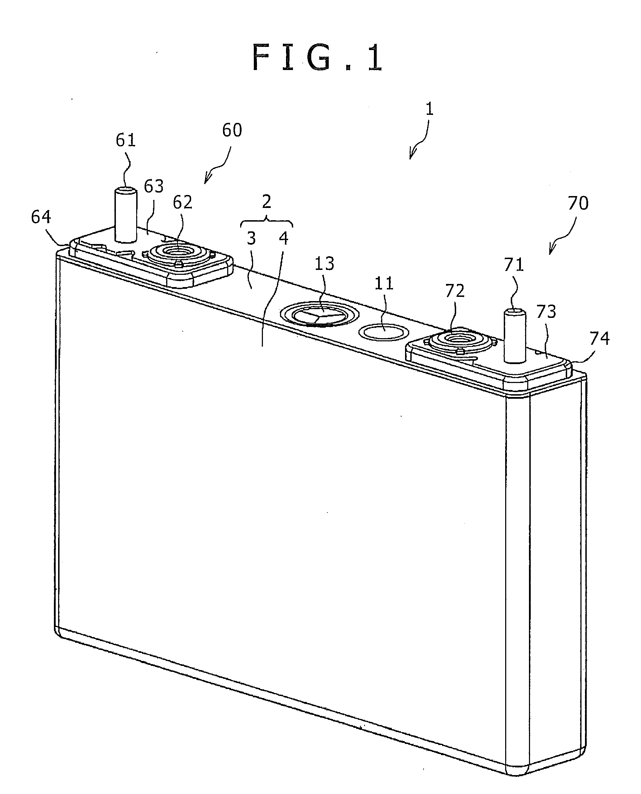

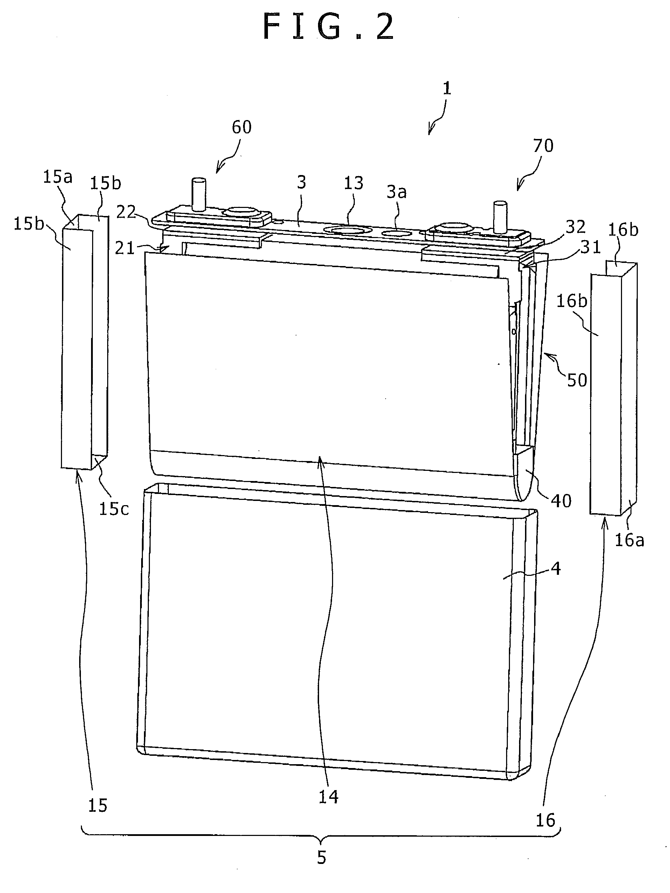

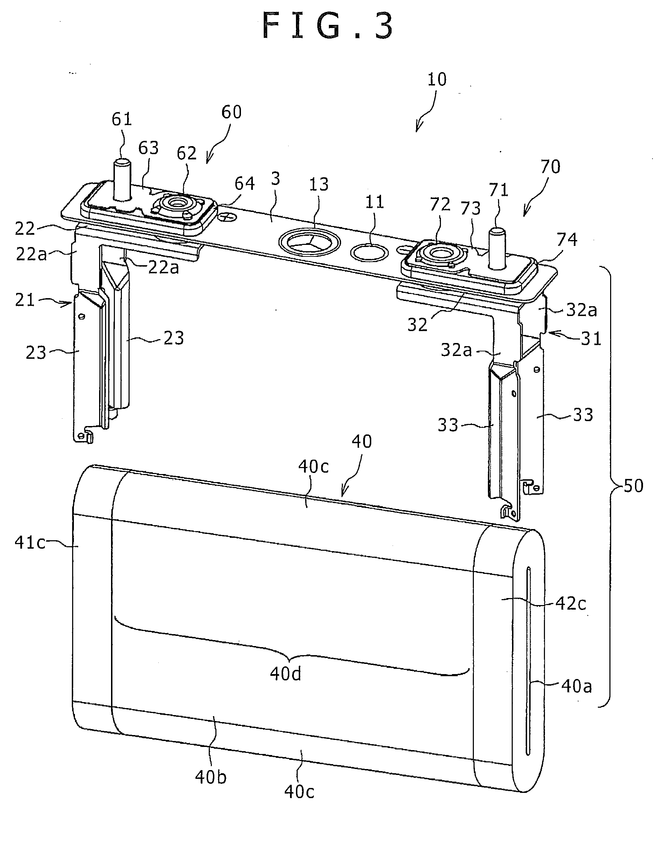

Fig. 1 is a perspective view showing the external appearance of a secondary battery according the present embodiment, Fig. 2 is an assembly view of the secondary battery, and Fig. 3 an assembly view showing a battery-lid assemblage, and a wound-electrode group, respectively.

With a secondary battery 1, a wound-electrode group (a power-generation element) 40 is housed in a battery container 2 low in profile, and in the shape of a cuboid substantially rectangular, the battery container 2 being made up of a battery lid 3, and a battery can 4, and a nonaqueous electrolyte (not shown) is injected into the battery container 2. The battery lid 3 and the battery can 4 are each formed of a metal material having conductivity, such as, for example, aluminum, iron, stainless steel, etc.

A positive-electrode collecting sheet 21, and a negative-electrode collecting sheet 31, etc. are integrally fitted to the battery lid 3, thereby making up a battery-lid unit 10. The positive-electrode collecting sheet 21 as well as the negative-electrode collecting sheet 31 of the battery-lid unit 10 are each joined to a positive-electrode metal-foil, or a negative-electrode metal-foil of the electrode group 40 by, for example, ultrasonic welding, thereby forming a battery-lid and power-generation element 50 to be housed in the battery can 4 through an opening in the top-end thereof.

The wound-electrode group 40 is structured such that the periphery thereof is covered by an insulating sheet 5, as shown in Fig. 2, to be thereby insulated from the battery can 4 in such a way as to prevent the wound-electrode group 40 from coming into direct contact with the battery can 4 to be subsequently housed therein. Further, a configuration of the insulating sheet 5 will be described in detail later on in the present description.

The battery lid 3 is provided with a liquid-injection port 3a for use in the injection of a nonaqueous electrolyte, and a safety valve 13 for use in the release of pressure when an internal pressure rises in excess of a reference value, due to overcharging, etc. A liquid-injection stopper 11 is fitted into the liquid-injection port 3a after the injection of the electrolyte to be' subsequently blocked by use of laser welding. The battery lid 3 is joined to the battery can 4 by laser welding to be hermetically sealed.

For the nonaqueous electrolyte, use can be made of lithium hexafluorophosphate (LiPF₆) dissolved at concentration of 1 mol/l in a mixed solution obtained by mixing ethylene carbonate with dimethyl - carbonate at a volume ratio of 1:2.

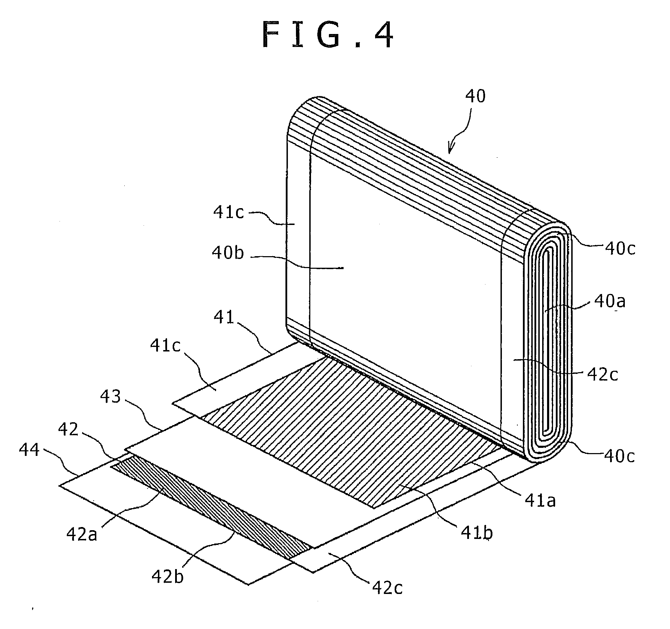

Fig. 4 is a perspective view showing the external appearance of the secondary battery, with a winding-completion side of the electrode group 40, being in as-exploded state.

The wound-electrode group 40 is formed by winding a positive electrode 41, and a negative electrode 42, around an axial core (not shown), in such a way as to be flattened in shape, through the intermediary of a first separator 43, and a second separator 44, respectively, Reference sign 40a indicates a void having a width corresponding to the thickness of the axial core. The wound-electrode group 40 has a flat section 40b, and a pair of crooks 40c formed so' as to be continuous with each other, on the respective sides of the flat section 40b.

The positive electrode 41 is a positive-electrode metal foil 41a made up of an aluminum foil, etc., with a positive-electrode mixture layer 41b formed on both the upper and underside surfaces thereof. The positive-electrode mixture layer 41b is formed by applying a positive-electrode mixture to the positive-electrode metal foil 41a such that a positive-electrode metal-foil exposure-portion (positive-electrode mixture non-processed portion) 41c is formed at an edge of the positive-electrode metal foil 41a, on one side thereof.

The negative electrode 42 is a negative-electrode metal foil 42a made up of, for example, a copper foil, etc. , with a negative electrode mixture layer 42b applied to both the upper and underside surfaces thereof. The negative-electrode mixture layer 42b is formed by applying a negative-electrode mixture to the negative-electrode metal foil 42a such that a negative-electrode metal-foil exposure-portion (negative-electrode mixture non-processed portion) 42c is formed at the other side-edge of the negative-electrode metal foil 42a, opposite from the side-edge where the , positive-electrode metal-foil exposure-portion 41c is disposed.

For production of the positive-electrode mixture layer 41b, an intermediate of the positive-electrode mixture is prepared by adding 10 parts by weight of scale-like graphite as an electrically conductive material, and 10 parts by weight of poly (vinylidene fluoride) (hereinafter referred to as PVDF) as a stabilizer to 100 parts by weight of lithium manganate (LiMn₂0₄) as a positive-electrode active-material, and N-methyl prirrolidone (hereinafter referred to as NMP) as a dispersion solvent is added to the intermediate before kneading, thereby producing the positive-electrode mixture. This positive-electrode mixture is applied to the respective surfaces of an aluminum foil 20 µm in thickness, with the positive-electrode metal-foil exposure-portion 41c kept in as-left out state. Thereafter, drying, pressing, and cutting are applied thereto, whereupon there is obtained the positive electrode 41 having a positive-electrode active-material applied part 90 µm in thickness (total thickness of both the upper and underside surfaces) except for the aluminum foil.

For production of the negative-electrode mixture layer 42b, an intermediate of the negative -electrode mixture is prepared by adding 10 parts by weight of PVDF as the stabilizer to 100 parts by weight of amorphous carbon powders as a negative-electrode active-material, and NMP as a dispersion solvent is added to the intermediate before kneading, thereby producing the negative-electrode mixture. This negative-electrode mixture is applied to the respective surfaces of a copper foil 10 µm in thickness, with the negative-electrode metal-foil exposure-portion kept in as-left out state. Thereafter, drying, pressing, and cutting are applied thereto, whereupon there is obtained the negative electrode 42 having a negative-electrode active-material applied part 70 µm in thickness (total thickness of both the upper and underside surfaces) except for the aluminum foil.

In order to form the wound-electrode group 40, winding is started by welding the respective tips of the first separator 43, and the second separator 44 to the axial core (not shown), and disposing the negative electrode 42 between the first and second separators 43 , 44, such that an end of the negative electrode 42, on a winding-start side, is positioned on the inner side of an end of the positive electrode 41, on a winding-start side. In this case, the positive-electrode metal-foil exposure-portion 41c, and the negative-electrode metal-foil exposure-portion 42c are disposed so as to be positioned at respective edges of the positive electrode 41, and the negative electrode 42, on sides of the wound-electrode group 40-, opposite from each other, in the crosswise direction of the wound-electrode group 40 (in the winding-axial direction). The negative electrode mixture layer 42b is formed such that the width thereof, in other words, the length thereof, in the winding-axial direction, is larger than the width of the positive-electrode mixture layer 41b. Further, the first separator 43 is sized such that a width thereof permits the positive-electrode metal-foil exposure-portion 41c of the positive electrode 41 to be externally exposed on one side-edge side thereof. The second separator 44 is sized such that a width thereof permits the negative-electrode metal-foil exposure-portion 42c of the negative electrode 42 to be externally exposed on the other side-edge side thereof.

The void 40a (refer to Figs. 3, and 4) is formed on the winding-start side of the electrode group 40, in other words, on a side thereof, adjacent to the axial core. Further, the second separator 44 is at the outermost periphery of the wound-electrode group 40, on the winding-completion side thereof, and the negative electrode 42 is present on the inner side of the second separator 44. Accordingly, every portion of the positive-electrode mixture layer 41b, throughout the whole length thereof, from the winding-start side to the winding-completion side, in the crosswise direction thereof, is covered by the negative-electrode mixture layer 42b.

Thus, a mixture-layer stacked-layer region 40d where the positive-electrode mixture layer 41b of the positive electrode 41 and the negative electrode mixture layer 42b of the negative electrode 42 are stacked up by overlapping each other is formed at the central position of the wound-electrode group 40, in the winding-axial direction thereof. Further, the positive-electrode metal-foil exposure-portion 41c of the positive electrode 41 is disposed on one side, in the winding-axial direction, to be externally exposed, whereas the negative-electrode metal-foil exposure-portion 42c of the negative electrode 42 is disposed on the other side, in the winding-axial direction, to be externally exposed.

The battery-lid assemblage 10 is provided with the battery lid 3, a positive-electrode side terminal forming-part 60, and a negative-electrode side terminal forming-part 70, as shown in Fig. 3. The positive-electrode side t forming-part 60 is made up of an external positive-electrode terminal 61, a positive-electrode connection terminal 62, a positive-electrode terminal block 63, an insulating sheet 64, and the positive-electrode collecting sheet 21. The external positive-electrode terminal 61, the positive-electrode terminal block 63, the positive-electrode connection terminal 62, and the positive-electrode collecting sheet 21 are integrally fixed to each other to be fitted to the battery lid 3.

The positive-electrode side terminal formatting-part 60 is fabricated as follows; the positive-electrode collecting sheet 21 is caulked into the positive-electrode connection terminal 62 beforehand. And, the insulating sheet 64 is disposed on a through-hole of the battery lid 3 after alignment of the through-hole of the battery lid 3 with a through-hole of the insulating sheet 64. Next, the external positive-electrode terminal 61 is fitted into a through-hole provided in the positive-electrode terminal block 63 to be fixed to the positive-electrode terminal block 63 over the insulating sheet 64. The external positive-electrode terminal 61 may be caulked by the positive-electrode terminal block 63.

Subsequently, the positive-electrode collecting sheet 21 caulked into the positive-electrode connection terminal 62 is inserted in the through-hole of the insulating sheet 64 from the underside of the battery lid 3. A part of the positive-electrode connection terminal 62, on the tip side thereof, in the shape of a cylinder slightly smaller in size than the through-hole of the positive-electrode terminal block 63, and by caulking the tip portion of the positive-electrode connection terminal 62, the positive-electrode side terminal formatting-part 60 can be integrally fitted to the battery lid 3.

In this state, the positive-electrode collecting sheet 21, the positive-electrode connection terminal 62, the positive-electrode terminal block 63, and the external positive-electrode terminal 61 are electrically coupled with each other. Further, the positive-electrode collecting sheet 21, the positive-electrode connection terminal 62, the positive-electrode terminal block 63, and the external positive-electrode terminal 61 are each insulated from the battery lid 3 by the agency of the insulating sheet 64.

The negative-electrode side terminal forming-part 70 is made up of an external negative-electrode terminal 71, a negative-electrode connection terminal 72, a negative-electrode terminal block 73, an insulating sheet 74, and a negative-electrode collecting sheet 31. The negative-electrode side terminal forming-part 70 has the same structure as that of the positive-electrode side terminal forming-part 60, and the external negative-electrode terminal 71, the negative-electrode terminal block 73, the negative-electrode connection terminal 72, the insulating sheet 74, and the negative-electrode collecting sheet 31 are integrally fixed to each other to be fitted to the battery lid 3.

In this state, the negative-electrode collecting sheet 31, the negative-electrode connection terminal 72, the negative-electrode terminal block 73, and the external negative-electrode terminal 71 are electrically coupled with each other. Further, the negative-electrode collecting sheet 31, the negative-electrode connection terminal 72, the negative-electrode terminal block 73, and the external negative-electrode terminal 71 are each insulated from the battery lid 3 by the agency of the insulating sheet 74.

With the secondary battery 1, by joining the respective collecting sheets 21, 31 of the positive-electrode and the negative-electrode to the wound-electrode group 40, charging/discharging can be carried out with respect to an external electronic device connected to the external positive-electrode terminal 61, and the external negative-electrode terminal 71, respectively.

The positive-electrode collecting sheet 21 is formed of aluminum or an aluminum alloy. The positive-electrode collecting sheet 21 has a main body 22 in a flat-sheet shape, fitted along the underside of the battery lid 3, and a pair of supports 22a, the respective supports 22a being bent downward to form a substantially 90° angle at respective ends of the main body 22, in the crosswise direction thereof. A joining-piece 23 flat in shape is formed at the respective tips of these supports 22a. The respective joining-pieces 23 are joined to the wound-electrode group 40 by the ultrasonic welding. The joining-pieces 23 are each bent at an angle in such a way as to be tilted against the support 22a. The joining-pieces 23 in pairs are tilted so as to be away from each other, in the crosswise direction of the battery lid 3, as the joining-pieces 23 shift outward from the center side of the battery lid 3, in the longitudinal direction thereof, and respective tilt directions of the joining-pieces 23 are at the same angle against the center plane although the respective tilt directions are opposed to each other, thereby rendering the joining-pieces 23 symmetrical with respect to a line. The positive-electrode metal-foil exposure-portions 41c of the electrode group 40 are inserted between the oining-pieces 23 in pairs, and the oining-pieces 23 are joined to the respective positive-electrode metal-foil exposure-portions 41c by the ultrasonic welding, while the positive-electrode metal-foil exposure-portions 41c of the electrode group 40 are in as-opened state, in a shape substantially resembling the letter V as inverted.

The negative-electrode collecting sheet 31 is formed of copper or a copper alloy. The negative-electrode collecting sheet 31 has the same construction as that of the positive-electrode collecting sheet 21. The negative-electrode collecting sheet 31 has a main body 32 resembling a flat-sheet in shape, fitted along the underside of the battery lid 3, and a pair of supports 32a, the respective supports 32a being bent downward to form a substantially 90° angle at respective ends of the main body 32, in the crosswise direction thereof. A joining-piece 33 flat in shape is formed at the respective tips of these supports 32a in pairs. The respective joining-pieces 33 are joined to the wound-electrode group 40 by the ultrasonic welding. The joining-pieces 23 are each bent at an angle in such a way as to be tilted against the support 32a. The joining-pieces 33 in pairs are tilted so as to be away from each other, in the crosswise direction of the battery lid 3, as the joining-pieces 33 shift outward from the center side of the battery lid 3, in the longitudinal direction thereof, and respective tilt directions of the joining-pieces 33 are at the same angle against the center plane although the respective tilt directions are opposed to each other, thereby rendering the joining-pieces 33 symmetrical with respect to a line. The negative-electrode metal-foil exposure-portions 42c of the electrode group 40 are inserted between the joining-pieces 33 in pairs, and the joining-pieces 33 are joined to the respective negative-electrode metal-foil exposure-portions 42c by the ultrasonic welding, while the positive-electrode metal-foil exposure-portions 41c of the electrode group 40 are in as-opened state, in a shape substantially resembling the letter V as inverted.

### [Insulating Sheet]

Next, a configuration of the insulating sheet 5 is described with reference to Fig. 2.

Fig. 2 is the assembly view showing the secondary battery in Fig. 1, in such a state as removed from the battery can 4.

The insulating sheet 5 in such a state as to cover the periphery of the electrode group 40 is housed in the battery can 4 to be interposed between the electrode group 40 and the inner wall of the battery can 4, thereby electrically isolating the electrode group 40 from the battery can 4.

The insulating sheet 5 includes a first insulating sheet 14 having a region partially interposed between the mixture-layer stacked-layer region 40d of the electrode group 40 and the battery can 4, and a region partially interposed between the battery can 4 and the collecting sheets 21, 31, respectively, and second insulating sheets 15, 16, having a region interposed between the battery can 4 and the metal-foil exposure-portion 41c, 42c of the wound-electrode group 40, respectively, ass well as a region interposed between the battery can. 4 and the collecting sheets 21, 31, respectively. The second insulating sheets 15, 16 are each larger in sheet-thickness than the first insulating sheet 14.

The first insulating sheet 14 is made up of an insulating synthetic resin material having flexibility. The first insulating sheet 14 is made up by causing one sheet of a sheet-member rectangular in shape to overlie the wound-electrode group 6 from below the battery-lid and power-generation element 50 in such a way as to be folded in two, thereby covering the wound-electrode group 40 across the ends thereof, on the respective sides, in the winding-axial direction, as shown in Fig. 2. The first insulating sheet 14 has a breadth extending across the ends of the wound-electrode group 40, on the respective sides thereof, in the winding-axial direction. Further, the first insulating sheet 14 has a length extending downward form the vicinity of the underside of the battery lid 3, opposing one face of the flat section 40b of the wound-electrode group 40, to make a U-turn along respective crooks 40c, on the lower side of the wound-electrode group 40, before opposing the other face of the flat.section 40b of the wound-electrode group 40, to subsequently extend up to the vicinity of the underside of the battery lid 3.

By fitting the second insulating sheets 15, 16 to the wound-electrode group 40, the first insulating sheet 14 is fixed to the wound-electrode group 40. Upon the wound-electrode group 40 being housed in the battery can 4, with the first insulating sheet 14 in such a state as fixed to the wound-electrode group 40, the first insulating sheet 14 is interposed between the mixture-layer stacked-layer region 40d of the electrode group 40 and the battery can 4.

The larger the sheet-thickness of the first insulating sheet 14 is, the more decrease in total thickness (the number of turns) of the mixture-layer stacked-layer region 40d of the electrode group 40 is required. Accordingly, if the sheet-thickness of the first insulating sheet 14 is rendered as small as possible, this will lead to expansion in battery capacity. Further, an active-material layer of the electrode group 40 undergoes expansion/contraction due to charging/discharging of the battery, and the expansion will lead to bulging of the battery can 4. Accordingly, if the sheet-thickness of the first insulating sheet 14 is rendered as small as possible, this will contribute to prevention of the bulging occurring to the battery from this point of view as well.

Unfortunately, if the separator 44 is wound around the outermost periphery of the wound-electrode group 40 to thereby attempt to attain insulation between the wound-electrode group 40 and the battery can 4, while omitting installation of the insulating sheet 14, this will lead to a possibility of occurrence of a trouble such as an internal short cut, etc. , due to breakage or a scratch, occurring to the outermost separator 44 at the time of inserting the wound-electrode group 40 into the battery can 4 because the separator 44 is a resin-film that is porous, thin, and soft. Furthermore, large sliding-friction occurring between the separator 44 on outermost periphery and the battery can 4 at the time of insertion will become one of the causes for breakage of the separator 44, thereby inviting deterioration in productivity.

Accordingly, the insulating sheet 14 is required between the mixture-layer stacked-layer region 40d of the electrode group 40 and the battery can 4, and further, the, sheet-thickness of the insulating sheet 14 is preferably as small as possible in order to avoid deterioration in battery capacity. The insulating sheet 14 having a thickness in a range of 20 to 80 µm can be suitably used, which may be changed depending on configuration conditions, etc. of the battery.

The second insulating sheets 15, 16 each are in a cubic shape resembling the letter U as horizontally oriented, in section, covering the metal-foil exposure-portions 41c, 42c, respectively. The second insulating sheets 15, 16 each are made up of a synthetic-resin larger in thickness than the first insulating sheet 14, and the second insulating sheets 15, 16 each may be formed by bending a sheet member, and may be formed by use of injection molding, vacuum molding, etc.

The second insulating sheet 15, in such a state as fitted to an end of the wound-electrode group 40, on a side thereof, adjacent to the positive-electrode (on one side in the winding-axial direction), is provided with an opposed-face section 15a opposed to an end face of the wound-electrode group 40, and a pair of lateral-face sections 15b, 15b, facing off against each other with the wound-electrode group 40 interposed therebetween. The second insulating sheet 15 is in a shape resembling the letter U as horizontally oriented, in section. Further, a bottom-face section 15c opposing the respective crooks 40c, on the bottom side of the wound-electrode group 40, is provided between the respective lower ends of the lateral-face sections 15b, 15b, in pairs. Further, a part of the second insulating sheet 15, on the battery-lid 3 side thereof, is kept open in order to avoid interference with the main body 22 as well as the pair of the supports 22a of the positive-electrode collecting sheet 21.

The opposed-face section 15a has a planar shape of a rectangle, in a predetermined width, extending across the crook 40c, on a side of the opposed-face section 15a, adjacent to the battery lid 3, and the crook 40c, on a side of the opposed-face section 15a, adjacent to the bottom side of the battery lid 3. The lateral-face sections 15b, 15b, in pars, are each formed by bending the opposed-face section 15a, on the respective sides thereof, in the crosswise direction of the opposed-face section 15a. And the lateral-face sections 15b, 15b clamp the ends of the flat section 40b of the wound-electrode group 40, in other words, a portion of the wound-electrode group 40, where the positive-electrode metal-foil exposure-portion 41c is stacked in a planar state, or the supports 22a joined to the positive-electrode metal-foil exposure-portions 41c, respectively, and the first insulating sheet 14 disposed on the respective sides thereof, in-between. The lateral-face sections 15b, 15b each being substantially identical in width size to the positive-electrode metal-foil exposure-portion 41c, the outermost periphery of the positive-electrode metal-foil exposure-portion 41c is covered by each of the lateral-face sections 15b, 15b, with the second insulating sheet 15 in such a state as fitted to the wound-electrode group 40.

The second insulating sheet 16, in such a state as fitted to an end of the wound-electrode group 40, on a side thereof, adjacent to the positive-electrode (on the other side in the winding-axial direction), is provided with an opposed-face section 16a opposed to an end face of the wound-electrode group 40, and a pair of lateral-face sections 16b, 16b, facing off against each other with the wound-electrode group 40 interposed therebetween. The second insulating sheet 16 is in a shape resembling the letter U as horizontally oriented, in section. Further, a bottom-face section 16c opposing the crook 40c on the bottom side of the wound-electrode group 40 is provided between the respective lower ends of the lateral-face sections 16b, 16b, in pairs. Further, a part of the second insulating sheet 16, on the battery-lid 3 side thereof, is kept open in order to avoid interference with the main body 32 as well as the pair of the supports 32a of the negative-electrode collecting sheet 31.

The opposed-face section 16a has a planar shape of a rectangle, in a predetermined width, extending across the crook 40c on a side of the opposed-face section 16a, adjacent to the battery lid 3, and the crook 40c on a side of the opposed-face section 16a, adjacent to the bottom side of the battery lid 3. The lateral-face sections 16b, 16b, in pars, are each formed by bending a part of the opposed-face section 16a, on the respective sides thereof, in the crosswise direction of the opposed-face section 16a. And the lateral-face sections 16b, 16b clamp an end of the flat-section 40b of the wound-electrode group 40, in other words, a portion of the wound-electrode group 40, where the negative-electrode metal-foil exposure-portions 42c are stacked, or the supports 32a joined to the negative-electrode metal-foil exposure-portions 42c, respectively, and the first insulating sheet 14 disposed on the respective sides thereof, in-between. As the lateral-face sections 16b, 16b each are substantially identical in width size to the negative-electrode metal-foil exposure-portions 42c, the outermost periphery of the negative-electrode metal-foil exposure-portions 42c is covered by the respective lateral-face sections 16b, 16b, with the second insulating sheet 16 in such a state as fitted to the wound-electrode group 40.

By housing the electrode group 40 with the respective second insulating sheets 15, 16, in such a state as fixed to the electrode group 40, into the battery can 4, the second insulating sheets 15 16 are each interposed between the battery can and the positive-electrode metal-foil exposure-portions 41c, 42c of the wound-electrode group 40, respectively, and between the battery can and the collecting sheets 21, 31, respectively.

As the second insulating sheets 15, 16 are each interposed between the battery can 4 and the metal-foil exposure-portions 41c, 42c, respectively, if an external force is applied to a main body, or the terminal block of the battery, there is a possibility that the collecting sheets 21, 31 are each deformed to be sandwiched between the battery can 4 and the collecting sheets 21, 31, respectively, thereby strongly impinging on the second insulating sheets 15, 16, respectively. Furthermore, there is a possibility that the collecting sheets 21, 31 come into contact with the battery can 4 through the intermediary of the insulating sheets 15, 16, respectively, at the time of inserting the wound-electrode group 40, together with the insulating sheets 15 and 16, into the battery can 4, thereby causing the collecting sheets 21, 31 to graze against the battery can 4. Still further, there is a possibility that if a large current flows through the collecting sheets 21, 31, respectively, the collecting sheets 21, 31 each reach a high temperature. Accordingly, the second insulating sheets 15, 16 each are required to withstand an external force and a high temperature, and for that reason, the insulating sheets 15, 16 each preferably has sheet-thickness as large as possible. The insulating sheets 15 and 16, having a thickness in a range of 100 to 300 µm, can be suitably used, which, however, may be changed depending on configuration conditions, etc. of the battery.

For the insulating sheet 5, use is made of an insulting material sheet-like in shape, and the insulating sheet 5 is formed by use of the insulting material in as-folded state. As the insulting material sheet-like in shape, suitable for use in the insulating sheet 5, use can be preferably made of a synthetic resin material excellent in insulating properties, insusceptible to wrinkle, etc., having high heat-resisting properties, such as, for example, a polyolefin resin material including polypropylene, polyethylene, and further, polyester, poly (phenylene sulfide), polyimide, etc. may be suitably used. Further, the first insulating sheet 14 interposed between the active-material layer region of the electrode group 40 and the battery can 4 need not be made of the same material as that for use in each of the second insulating sheets 15, 16, interposed between the battery can 4 and the respective metal-foil exposure-portions. A combination of the various materials described as above may be made.

In assembling of the secondary battery 1 having the insulating sheet 5 described as above, the first insulating sheet 14 in such a state as folded in two is first caused to overlie the wound-electrode group 40 by starting winding from below the battery-lid and power-generation element 50. By so doing, the wound-electrode group 6 is covered with the first insulating sheet 14 across the ends of the wound-electrode group 40, on the respective sides thereof, in the winding-axial direction.

Next, the second insulating sheets 15, 16 each are caused to approach the wound-electrode group 40 from the respective sides thereof, in the winding-axial direction, to thereby cause the metal-foil exposure-portions 41c, 42c of the wound-electrode group 40, and the respective ends of the first insulating sheet 14 to be clamped between the pair of the lateral-face sections 15b, 15b, and 16b, 16b, respectively, thereby fixing the first insulating sheet 14, and the second insulating sheets 15, 16 to the wound-electrode group 40. By so doing, the wound-electrode group 40 is caused to be in a state where the external sides thereof are covered by the insulating sheet 5.

Subsequently, the wound-electrode group 40 is inserted into the battery can 4 from above the battery can 4 , and the opening of the battery can 4 is blocked, thereby executing sealing between the battery can 4 and the battery lid 3 by welding, using the laser welding. Subsequently, an electrolyte is injected into the battery can 4 through the liquid-injection port 3a, and the liquid-injection port 3a is blocked with the liquid-injection stopper 11 before sealing by welding, using the laser welding.

With the secondary battery 1 according to the present embodiment, described as above, the first insulating sheet 14 is interposed between the mixture-layer stacked-layer region 40d of the electrode group 40 and the battery can 4, whereas the second insulating sheets 15, 16 are interposed between the battery can 4 and the respective metal-foil exposure-portions 41c, 42c of the wound-electrode group 40, respectively, and between the battery can 4 and the respective collecting sheets 21 and 31, respectively, the second insulating sheets 15, 16 being each larger in sheet-thickness than the first insulating sheet 14.

By rendering the sheet-thickness of the first insulating sheet 14 as small as possible, the total thickness (the number of turns) of the mixture-layer stacked-layer region 40d of the electrode group 40 can be increased. Accordingly, this will lead to expansion in battery capacity, and volume energy density can be rendered higher.

Further, if the first insulating sheet 14 is rendered smaller in thickness, clearance between the first insulating sheet 14 and the battery can 4 can be rendered larger, thereby enabling the bulging of the battery can 4, due to expansion/contraction of the active-material layer, accompanying charging/discharging of the battery, to be prevented.

Further, because the first insulating sheet 14 small in thickness is disposed between the mixture-layer stacked-layer region 40d of the electrode group 40 and the battery can 4, smooth insertion without damaging the separator 44 can be executed at the time of inserting the electrode group 40 into the battery can 4.

The second insulating sheets 15, 16 each can be enhanced in strength by increasing the sheet-thickness thereof. Accordingly, even if an external force is applied to, for example, the main body, or the terminal block of the battery, thereby causing the collecting sheets 21, and 31 to be deformed, and strongly impinging on the battery can 4 through the intermediary of the second insulating sheets 15, 16, exiting between the battery can 4 and the collecting sheets 21, 31, respectively, this will not cause the second insulating sheets 15, 16 to be broken, so that insulation between the battery can 4 and the metal-foil exposure-portions 41c, 42c of the wound-electrode group 40, respectively, or between the battery can 4 and the collecting sheets 21 and 31, respectively, can be maintained.

The thickness of each of the insulating sheets 15, 16 is preferably as large as possible. For example, even if the collecting sheets 21, 31 come into contact with the battery can 4 through the intermediary of the insulating sheets 15, 16, respectively, at the time of inserting the wound-electrode group 40, together with the insulating sheets 15 and 16, into the battery can 4, thereby causing the collecting sheets 21, 31 to graze against the battery can 4, and further, a large current flows through the collecting sheets 21 and 31, thereby causing the collecting sheets 21 and 31 to reach a high temperature, the insulating sheets 15 and 16 each can withstand the external force, and the high temperature because the insulating sheets 15, and 16 each are large in thickness.

With the secondary battery 1 described as above, insulating properties between the wound-electrode group 40 and the battery can 4, against the external force, can be enhanced without causing deterioration in battery capacity.

Further, with the present embodiment described as above, there has been described the case, as an example, where, the first insulating sheet 14 has a size for enabling extension thereof, up to the metal-foil exposure-portions 41c, 42c of the wound-electrode group 40, respectively, and the pair of the lateral-face sections 15b, 15b, and 16b, 16b, of the second insulating sheets 15 and 16, respectively, overlap the respective ends of the first insulating sheet 14 at the respective metal-foil exposure-portions 41c, 42c of the wound-electrode group 40. However, the first insulating sheet 14 may be rendered identical in size to the mixture-layer stacked-layer region 40d. By so doing, the first insulating sheet 14 can be reduced in size, and the cost.thereof can be lowered to an extent corresponding to reduction in size. In such a case, the first insulating sheet 14 is fixed to the wound-electrode group 40 or the second insulating sheets 15 and 16, respectively, with the use of a tape, etc.

Still further, with the present embodiment described as above, there has been described the case, as an example, where the separator 44 is at the outermost periphery of the wound-electrode group 40, however, since the outermost'periphery of the wound-electrode group 40 is covered by the first insulating sheet 14, the positive electrode 41, or the negative electrode 42, instead of the separator, can be at the outermost periphery. By so doing, a winding length of the separator, in the wound-electrode group 40, can be shortened, so that the cost of the separator can be reduced.

### <Second Embodiment>

Next, a second embodiment of a secondary battery according to the invention is described below. Further, constituent elements identical to those in the first embodiment are denoted by like reference signs, thereby omitting detailed description thereof.

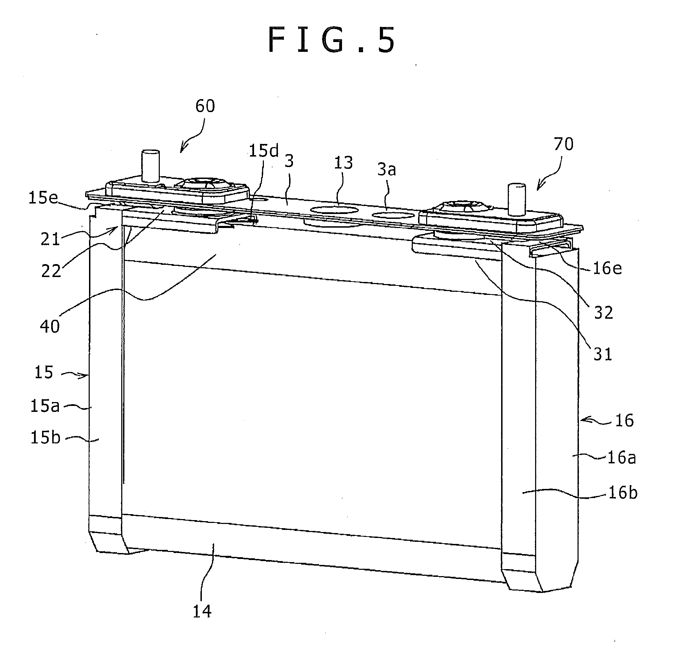

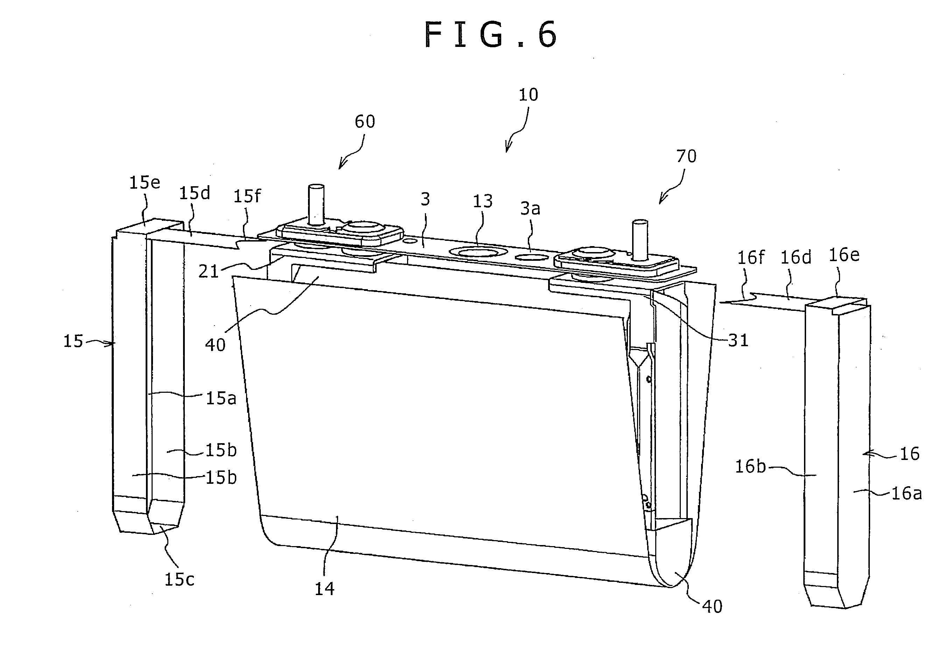

Fig. 5 is an assembly view for use in describing configurations of respective insulating sheets according to the second embodiment, Fig. 6 is an assembly view of the insulating sheets in Fig. 5, and Fig, 7 is an assembly view of the insulating sheets in Fig. 5, as well, being a perspective view differing from Fig. 6, in respect of an inclination angle. The present embodiment has a feature in that respective second insulating sheets 15, 16 have first insulation parts 15d, 16d, interposed between a wound-electrode group 40 and respective collecting sheets 21, 31, and second insulation parts 15e, 16e, interposed between a battery lid 3 and the respective collecting sheets 21, 31.

The respective second insulating sheets 15, 16 are provided with the first insulation parts 15d, 16d, bent at respective top ends of opposed-face sections 15a to be protruded in respective directions identical to those for a pair of lateral-face sections 15b, 16b, and second insulation parts 15e, 16e, bent at the respective top ends of the lateral-face sections 15b, 16b, in such a direction as to approach each other to overlap the first insulation parts 15d, 16d, respectively.

By fitting the second insulating sheet 15 to an end of the wound-electrode group 40, on a side thereof, adjacent to a positive-electrode, the first insulation part 15d is interposed between a crook 40c of the wound-electrode group 40 and a main body 22 of the collecting sheet 21, and the second insulation part 15e is interposed between the main body 22 of the collecting sheet 21, and the rear surface of the battery lid 3.

Similarly, by fitting the second insulating sheet 16 to an end of the wound-electrode group 40, on a side thereof, adjacent to a negative-electrode, the first insulation part 16d is interposed between a crook 40c of the wound-electrode group 40 and a main body 32 of the collecting sheet 31, and a second insulation part 16e is interposed between the main body 32 of the collecting sheet 31 and the rear surface of the battery lid 3.

Accordingly, if an external force is applied to, for example, a secondary battery 1, and the wound-electrode group 40 is vertically moved inside a battery can 4, occurrence of short circuit between the wound-electrode group 40 and the respective collecting sheets 21, 31 can be prevented by virtue of the first insulation parts 15d, 16d, respectively, and further, occurrence of short circuit between the battery lid 3 and the respective collecting sheets 21, 31 can be prevented by virtue of the second insulation part 15e, 16e, respectively.

The respective tips of the first insulation parts 15d, 16d are provided with notched parts 15f, 16f, formed by cutting out respective central portions of the tips, in the shape of a conclave. The notched parts 15f, 16f are provided in order to facilitate a work for inserting the respective tips of the first insulation parts 15d, 16d between the crook 40c of the wound-electrode group 40 and the respective main bodies 22, and 32 of the collecting sheets 21, 31.

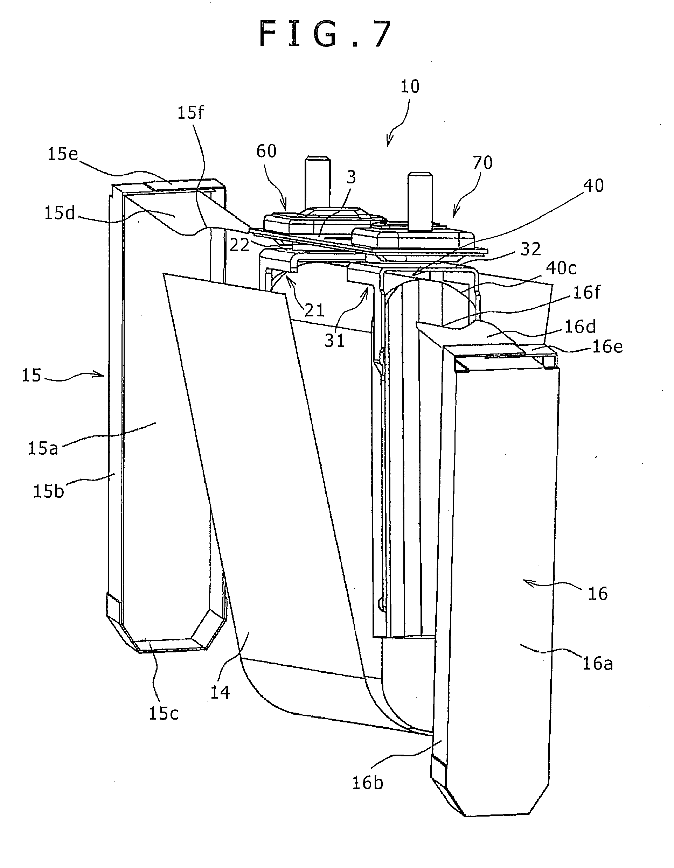

A gap between the crook 40c of the wound-electrode group 40 and the respective main bodies 22, and 32 of the collecting sheets 21, and 31 is the narrowest at the central part of the gap, in the crosswise direction thereof, in particular, as shown in Fig. 7, and the further a part of the gap is away from the central part thereof, the wider will be the part of the gap. Accordingly, if the respective tips of the first insulation parts 15d, and 16d are in the shape of a simple straight line, there is a possibility that the respective tips will come into contact with the central part of the gap, the narrowest in dimension, thereby rendering it harder for the first insulation parts 15d, 16d to be inserted between the crook 40c of the wound-electrode group 40 and the respective main bodies 22, and 32 of the collecting sheets 21, and 31 when an attempt is made for insertion of the respective first insulation parts 15d, 16d between the crook 40c of the wound-electrode group 40 and the respective main bodies 22, and 32 of the collecting sheets 21, and 31.

For this reason, the respective tips of the first insulation parts 15d, and 16d are provided with the notched parts 15f, 16f, respectively, to form the first insulation parts 15d, and 16d into a shape resembling the letter V such that the respective ends of the first insulation parts 15d, and 16d, in the crosswise direction thereof, are protruded more than the central part thereof, thereby enabling the respective tips of the first insulation parts 15d, and 16d to be first inserted into a wider part of the gap between the crook 40c of the wound-electrode group 40 and the respective main bodies 22, and 32 of the collecting sheets 21, and 31. Once the respective tips of the first he insulation parts 15d, and 16d can be inserted into the gap, the first insulation parts 15d, and 16d can be automatically guided thereafter if pushing ahead as it is, and the first insulation parts 15d, and 16d can be smoothly inserted into even the central part of the gap, narrower in dimension.

The insulating sheets 15, 16 each are larger in sheet-thickness than the first insulating sheet 14, as is the case with the first embodiment. Accordingly, even if an external pressure acts on a battery container 2, and an interval between the wound-electrode group 40 and the collecting sheets 21, and 31, respectively, as well as between the battery lid 3 and the respective collecting sheets 21, 31 is rendered less, resulting in such deformation as collapse, leading to contact therebetween, sufficient insulation can be secured. Further, insulation at three regions, in total, can be coped with one sheet of the insulating sheet, the three regions including (1) a region between the battery can 4 and the respective exposure-portions 41c, 42c of the wound-electrode group 40, and a region between the battery can 4 and the collecting sheets 21, 31, (2) a region between the crook 40c of the wound-electrode group 40 and the respective main bodies 22, 32 of the collecting sheets 21, 31, and (3) a region between the main body 32 of the collecting sheet 31 and the rear surface of the battery lid 3, so that it is possible to enhance safety, while productivity is improved without causing an increase in component cost.

### <Third Embodiment>

Next, a third embodiment of a secondary battery according to the invention is described below. Further, constituent elements identical to those in the first and second embodiments, respectively, are denoted by like reference signs, thereby omitting detailed description thereof .

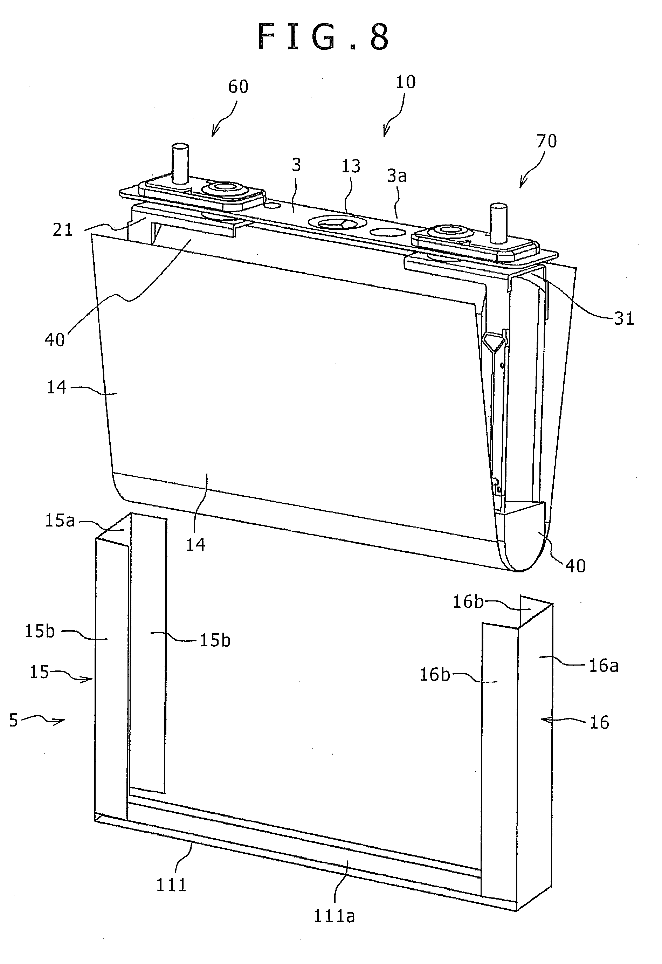

Fig. 8 is an assembly view for use in describing configurations of respective insulating sheets according to the third embodiment of the invention. The embodiment has a feature in that a matched pair of second insulating sheets 15, 16 is joined with each other at a connection section 111 so as to be integrally made up.

The second insulating sheets 15, 16 each are larger in sheet-thickness than a first insulating sheet 14, as is the case with the first embodiment. And the connection section 111 is provided with an open-section 111a. The open-section 111a has an opening formed such that a central part thereof, in the crosswise direction of the open-section 111a, in a predetermined width, is extended along the horizontal direction. Since the connection section 111 is provided with the open-section 111a, it is possible to prevent a gap between a crook 40c on the lower side of the wound-electrode group 40 and the bottom face of a battery can 4 from becoming narrower due to presence of the connection section 111. Accordingly, it is possible to prevent deterioration in battery capacity, due to limitations on the total thickness (the number of winding turns) in the mixture-layer stacked-layer region 40d of the electrode group 40.

Further, in the case of the first embodiment described as above, the wound-electrode group 40 is covered by the respective insulating sheets at three points, in total; however, in the third embodiment, the wound-electrode group 40 is covered by the respective insulating sheets at two points. Thus, decrease in the number of insulating sheet components will facilitate transportation as well as position designation of the respective insulating sheets at the time of assembling, thereby enabling an assembling work to be executed with ease.

### <Fourth Embodiment>

Next, a fourth embodiment of a secondary battery according to the invention is described below. Further, constituent elements identical to those in the first through third embodiments, are denoted by like reference signs, thereby omitting detailed description thereof .

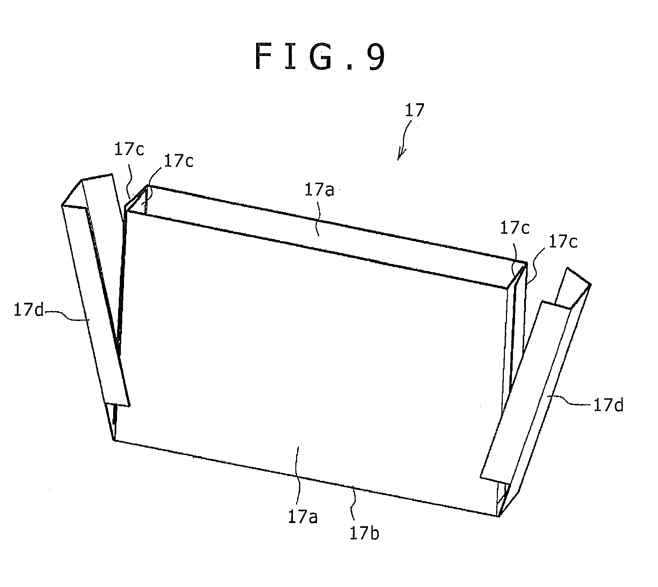

Fig. 9 is a perspective view for use in describing configurations of respective insulating sheets according to the fourth embodiment of the invention, showing part of the insulating sheets, in as-exploded state.

The present embodiment has a feature in that one sheet of an insulating sheet 17 in a predetermined thickness as preset is bent to thereby constitute a first insulating sheet 14, and second insulating sheets 15, 16, respectively, and the insulating sheet 17, in sheet-thickness corresponding to only one sheet, is interposed between a mixture-layer stacked-layer region 40d of a wound electrode group 40 and a battery can 4, thereby rendering the sheet-thickness as small as possible, whereas portions of the insulating sheet 17 are each partially bent to overlap each other so as to cause an increase in thickness between the battery can 4 and the metal-foil exposure-portions 41c, 42c, respectively, and between the battery can 4 and collecting sheet 21, 31, respectively, thereby securing strength as required.

The insulating sheet 17 is substantially the same in thickness as the first insulating sheet 14 according to the first through third embodiments, described as above. One sheet of the insulating sheet 17 is bent to be formed in the shape of a flat box capable of accommodating an electrode group 40, the flat box having a pair of wide-width surface-section 17a, 17a, opposed to a mixture-layer stacked-layer region 40d of the wound electrode group 40 and a bottom-face section 17b. And a first sidewall surface-section 17c is provided at both ends of the respective wide-width surface-sections 17a. The first sidewall surface-section 17c is formed by bending the insulating sheet 17, at both ends of the respective wide-width surface-sections 17a, in such a way as to oppose respective end-faces of the wound electrode group 40, on the outer-side thereof, in the winding-axial direction.

A second sidewall surface-section 17d is provided at both ends of the bottom-face section 17b. The second sidewall surface-section 17d is in a shape resembling laterally-facing U, in section, covering the exterior of the first sidewall surface-section 17c, the second sidewall surface-section 17d being formed by bending the insulating sheet 17 at both ends of the bottom-face section 17b. The second sidewall surface-section 17d in such dimensions as to allow interposition thereof between a battery can 4 and metal-foil exposure-portions 41c, 42c of the wound electrode group 40, respectively, as well as between the battery can 4 and collecting sheet 21, 31, respectively.

With a configuration of the insulating sheets 17 described as above, the sheet-thickness of a portion of the insulating sheet 17, interposed between the mixture-layer stacked-layer region 40d of the wound electrode group 40 and the battery can 4 can be a sheet-thickness corresponding to that for only one sheet of the insulating sheet 17, whereas the sheet-thickness of a portion of the insulating sheet 17, interposed between the battery can 4 and the metal-foil exposure-portions 41c, 42c, respectively, as well as between the battery can 4 and the collecting sheet 21, 31, respectively, can be a sheet-thickness corresponding to that for two sheets or three sheets of the insulating sheet 17.

Accordingly, deterioration in battery capacity, due to limitations on the total thickness (the number of winding turns) in the mixture-layer stacked-layer region 40d of the electrode group 40, can be prevented, and sufficient insulation can be secured.

Further, with the configuration of the insulating sheets 17 described as above, insulation between the wound electrode group 40 and the battery can 4 can be formed with use of only one sheet of the insulating sheets 17 small in thickness. Accordingly, component costs can be checked, and enhancement in assembling-properties can be achieved.

### <Fifth Embodiment>

Next, a fifth embodiment of a secondary battery according to the invention is described below. Further, constituent elements identical to those in the first through fourth embodiments, are denoted by like reference signs, thereby omitting detailed description thereof.

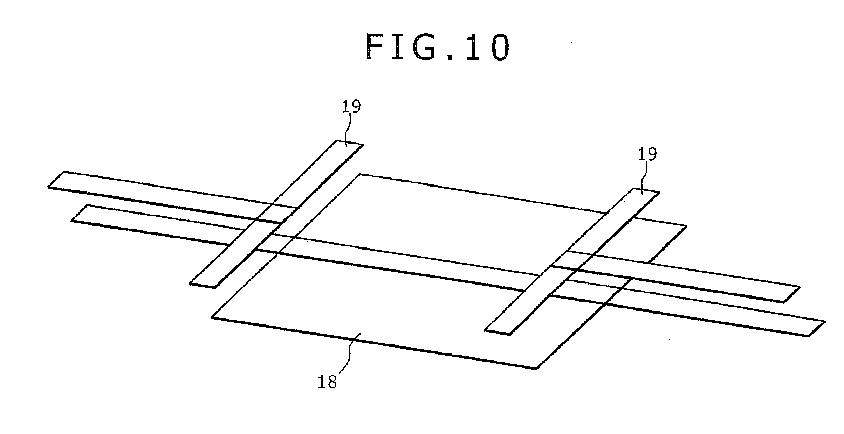

Fig. 10 is a perspective view for use in describing configurations of insulating sheets according to the fifth embodiment of the invention, showing the insulating sheets, in as-exploded state.

The present embodiment has a feature in that, with respect to one sheet of an insulating sheet 18 in a predetermined thickness as preset, other insulating sheets 19 are additionally laminated to respective portions of the insulating sheet 18, interposed between a battery can 4 and metal-foil exposure-portions 41c, 42c, respectively, and between the battery can 4 and collecting sheet 21, 31, respectively, beforehand, thereby achieving an increase in thickness so as to secure required strength.

As insulation is applied to a region of the insulating sheet 18, opposed to a mixture-layer stacked-layer region 40d of a wound-electrode group 40, the region being small in thickness because the insulating sheet 19 is laminated thereto, this configuration will lead to expansion in battery capacity, and volume energy density can be raised higher. Furthermore, the bulging of the battery can be prevented. For the insulating sheet 19, use may be made of either one sheet, or a plurality of sheets. If the sheets are laminated beforehand, this will enable the shape of the insulating sheet to be varied with ease, and enhancement in independence can be attained.

Having described the embodiments of the invention in detail as above, it is to be pointed out that the invention be not limited thereto and that various changes in design may be made without departing from the sprit and scope as set out in the accompanying claims. For example, with the embodiments described as above, the invention is described in detail for the sake of clarity, however, it is to be understood that the invention be not necessarily limited to the embodiment having all the configurations as described. Further, a part of the configuration of a specific embodiment can be replaced with the configuration of another embodiment, and the configuration of another embodiment may be added to that of a specific embodiment. Still further, addition-deletion-replacement, with the use of another configuration, may be applied to part of the configuration of each of the embodiments described as above.

### List of Reference Signs

- 1:: secondary battery
- 2:: battery container
- 3:: battery lid
- 4:: battery can
- 5:: insulating sheet
- 11:: liquid-injection stopper
- 13:: safety valve
- 14:: first insulating sheet
- 15,: 16: second.insulating sheet
- 21:: positive-electrode collecting sheet
- 31:: negative-electrode collecting sheet
- 40:: wound-electrode group
- 41:: positive-electrode
- 41b:: positive-electrode mixture layer
- 41c:: positive-electrode metal-foil exposure-portion (positive-electrode mixture non-processed portion)
- 42:: negative-electrode
- 42b:: negative electrode mixture layer
- 42c:: negative-electrode metal-foil exposure-portion (negative-electrode mixture non-processed portion)

## Claims

1. A secondary battery comprising:
a wound-electrode group made up by winding respective electrodes having a metal foil with a mixture layer formed thereon;
a battery can for use in housing the wound-electrode group therein; and
an insulator interposed between the wound-electrode group and the battery can,
wherein regions of the insulator, interposed between the battery can and a pair of metal-foil exposure-portions, respectively, formed on respective sides of the wound-electrode group, in a winding-axial direction thereof, are larger in thickness than a region of the insulator, interposed between the battery can and a mixture-layer stacked-layer region formed at the center of the wound-electrode group, in the winding-axial direction thereof.

2. The secondary battery according to claim 1, further comprising:
a first insulating sheet covering the mixture-layer stacked-layer region, and a pair of second insulating sheets covering the pair of the metal-foil exposure-portions, respectively,
wherein the pair of the second insulating sheets are each larger in sheet-thickness than the first insulating sheet.

3. The secondary battery according to claim 2, further comprising:
collecting sheets connected to the metal-foil exposure-portions, respectively,
wherein the pair of the second insulating sheets are each made up in such a way as to cover the collecting sheets and the metal-foil exposure-portions.

4. The secondary battery according to claim 3, further comprising:
a battery lid with the collecting sheets fitted thereto,
wherein the collecting sheet includes a main body interposed between the metal-foil exposure-portion and the battery lid, and the pair of the second insulating sheets each include a first insulation part interposed between the metal-foil exposure-portion and the main body, and a second insulation part interposed between the main body and the battery lid.

5. The secondary battery according to claim 3, wherein the pair of the second insulating sheets is joined with each other at a connection section and the connection section has an open-section provided at a position of the connection section, opposing the wound-electrode group.

6. The secondary battery according to claim 2, wherein one sheet of an insulating sheet in a predetermined thickness as preset is bent to thereby make up the first insulating sheet, and the second insulating sheets, respectively.

7. The secondary battery according to claim 2, wherein, with respect to one sheet of insulating sheet in a predetermined thickness as preset, having collecting sheets connected to the metal-foil exposure-portions, respectively, not less than one sheet of other insulating sheets are additionally laminated to respective portions of the insulating sheet, pre-interposed between the battery can and the metal-foil exposure-portions, respectively, and between the battery can and the collecting sheets, respectively, thereby making up the first insulating sheet and the second insulating sheets, respectively.
